# EUROPEAN PATENT SPECIFICATION

(11) **EP 4 265 936 B1**
(45) Date of publication and mention of the grant of the patent: **25.11.2026**
(21) Application number: 23189486.6
(22) Date of filing: 20.05.2020
(51) Int. Cl.: H01M 50/209, H01M 10/613, H01M 10/647, H01M 10/6555, H01M 10/6557, H01M 10/6563, F16F 1/02

(54) **TEMPERATURE CONTROL ASSEMBLY AND BATTERY PACK**
TEMPERATURREGELUNGSANORDNUNG UND BATTERIEPACK
ENSEMBLE DE CONTRÔLE DE TEMPÉRATURE ET BLOC-BATTERIE

(30) Priority: 18.06.2019 CN 201910528793
(43) Date of publication of application: 25.10.2023
(62) Document number(s) of the earlier application(s) in accordance with Art. 76 EPC: 20815703.2 / 3 792 994
(73) Proprietor: Contemporary Amperex Technology (Hong Kong) Limited, Central, Central And Western District (HK)
(72) Inventor: WU, Buwei, Ningde, 352100 (CN); HUANG, Yincheng, Ningde, 352100 (CN); SU, Yongqiang, Ningde, 352100 (CN); ZHOU, Linggang, Ningde, 352100 (CN); ZHAO, Fenggang, Ningde, 352100 (CN); CHEN, Songqiao, Ningde, 352100 (CN)
(74) Representative: Gong, Jinping

(56) References cited:
- WO-A1-2017/124124
- JP-A- 2014 157 721
- JP-A- 2019 046 578
- US-A1- 2011 052 960
- US-A1- 2011 293 982

## Description

This application claims priority to Chinese Patent Application No. CN201910528793.7, filed on June 18, 2019 and entitled "TEMPERATURE CONTROL ASSEMBLY AND BATTERY PACK".

### TECHNICAL FIELD

The present invention relates to the field of battery technologies, and in particular, to a temperature control assembly and a battery pack.

### BACKGROUND

A battery pack usually includes a plurality of batteries in groups. In the group technology, in addition to ensuring strength and performance of a structure, an effect of the structure on the battery life should be considered. Temperature and expansion force have a great impact on the battery life, and thus heat management and expansion force must be considered during design.

At present, there are two major methods of heat management design: water cooling and air cooling. Because of high costs of the water cooling, air cooling is widely used in the battery pack.

In terms of expansion force design, during charge and discharge of the battery pack, the batteries will gradually expand and interact with a fixed structure (that is, generate an expansion force). A proper expansion force will benefit reaction of the batteries, but an excessive expansion force will make the battery overpressure and lead to lithium precipitation and even irreversible capacity loss, thus greatly reducing the battery life.

In order to alleviate the expansion force, the following methods are mainly used at present: (1) The batteries are directly attached to each other to strengthen the external structure, so as to directly resist the expansion force. The deficiency of this method is that when battery capacity and a quantity of series of batteries gradually increase, the expansion force of the battery group will increasingly larger, thus reducing the battery life. (2) A structure such as a cushion pad is added between the batteries to absorb the expansion force through the material's own expansion and contraction characteristics, thus reducing the expansion force of the grouped batteries. The deficiency of this method is that large surfaces of the batteries are close to the cushion pad, and only side and bottom of the batteries can be used to dissipate heat, thereby reducing heat dissipation efficiency. (3) The batteries are separated from each other with gaps to allow the batteries to expand freely. The deficiency of this method is that the batteries expand freely at the beginning, and it is easy to react insufficiently under no pressure, which reduces the service life. In addition, if the batteries expand greatly and the reserved gaps are too large, a group volume will be affected. Documents US2011/293982, JP2014157721 and JP2019046578 disclose elastic means in a battery pack.

### SUMMARY

In view of the problems in the background, an objective of the present invention is to provide a temperature control assembly for a battery pack and a battery pack. The invention is set out in the appended set of claims. When the temperature control assembly is applied to the battery pack, the temperature control assembly can not only perform thermal management on batteries, but also absorb expansion forces generated by the batteries, thereby reducing deformation of the batteries under the effect of the expansion force and greatly improving service life of the batteries.

To achieve the foregoing objective, the present invention provides a temperature control assembly for a battery pack according to any of claims 1-4, including a first side plate; a second side plate, disposed facing to the first side plate along a longitudinal direction, where the second side plate is connected to the first side plate and forms a cavity together with the first side plate; and an elastic thermal pad, disposed in the cavity to divide the cavity into a plurality of passages. The elastic thermal pad has a main body, and the main body includes: a first plate section, which is close to the first side plate in the longitudinal direction and extends in a vertical direction; a second plate section, which is close to the second side plate in the longitudinal direction and extends in the vertical direction; and a connection section, which extends obliquely from the first side plate toward the second side plate and is connected to the first plate section and the second plate section.

In some embodiments of the present invention, the first plate section is in contact with the first side plate, and the second plate section is in contact with the second side plate. According to the present invention, the first side plate has a first body, extending in the vertical direction; and a first extension portion, being connected to one end of the first body and extending in the longitudinal direction, where the first extension portion is connected to the second side plate.

In some embodiments of the present invention, the elastic thermal pad is movably disposed in the cavity formed by the second side plate and the first side plate. Alternatively, two ends of the elastic thermal pad in the vertical direction are respectively abutted against corresponding first extension portions of the first side plate.

According to the present invention, the elastic thermal pad further has a compression portion, being connected to one end, in the vertical direction, of the main body. The compression portion is disposed so that when the first plate section and the second plate section of the main body are compressed by the first side plate and the second side plate in the longitudinal direction, the compression portion is compressed by the main body and deformed.

In some embodiments not forming part of the present invention, the compression portion is formed as a winding structure. When the first plate section and the second plate section of the main body are compressed by the first side plate and the second side plate in the longitudinal direction, the compression portion is abutted against the first extension portion of the first side plate in the vertical direction and the main body is wound around the compression portion to compress the compression portion.

According to the present invention, the compression portion is formed as an arch structure. The elastic thermal pad further has a connecting portion, being located between the compression portion and the first extension portion in the vertical direction and connected to the compression portion. When the main body is compressed by the first side plate and the second side plate in the longitudinal direction, the connecting portion abuts against the first extension portion of the first side plate, and the first extension portion compresses the compression portion together with the main body via the connecting portion.

According to the present invention, the compression portion includes: a third plate section, extending in the vertical direction and spaced from the first side plate and the second side plate in the longitudinal direction; a first extrusion section, extending obliquely from the third plate section toward the first side plate and connected to the third plate section and the main body; and a second extrusion section, extending obliquely from the third plate section toward the first side plate and connected to the third plate section and the connecting portion.

In some embodiments of the present invention, there is one elastic thermal pad.

In some embodiments of the present invention, there are at least two elastic thermal pads, and the at least two elastic thermal pads include a first elastic thermal pad and a second elastic thermal pad. The temperature control assembly further includes a partition plate, configured to extend in the longitudinal direction and be connected to the first side plate and the second side plate. The first elastic thermal pad is disposed above the partition plate, and the second elastic thermal pad is disposed below the partition plate.

The present invention further provides a battery pack according to claim 5 including a plurality of batteries and the temperature control assembly mentioned above, where the plurality of batteries includes a first battery and a second battery, and the temperature control assembly is disposed between the first battery and the second battery.

The present invention further provides an apparatus according to claim 6 including the battery pack mentioned above, where the battery pack provides electrical energy.

The beneficial effects of the present invention are as follows:
In the battery pack of the present invention, when external air flows through passages of the temperature control assembly, heat dissipation treatment of batteries can be implemented. In addition, during use of the battery pack, the batteries will generate expansion forces. In this case, expansion forces of two adjacent batteries are respectively applied to the first side plate and the second side plate, and the first side plate and second side plate respectively compress the first plate section and the second plate section of the main body in the longitudinal direction. Due to elastic and structural characteristics of the elastic thermal pad, the main body of the elastic thermal pad is deformed under the action of extrusion of the first side plate and the second side plate to absorb the expansion forces of the batteries in time, thereby reducing the degree of deformation of the batteries under the expansion forces, and thus service life of the batteries is greatly improved.

### BRIEF DESCRIPTION OF DRAWINGS

FIG. 1 is a schematic structural diagram of a battery pack according to the present invention;
FIG. 2 is a top view of the battery pack shown in FIG. 1 after the upper cover is removed;
FIG. 3 is a schematic structural diagram of a temperature control assembly according to an embodiment of the present invention;
FIG. 4 is an exploded diagram of FIG. 3;
FIG. 5 is an enlarged view of the circle portion in FIG. 3;
FIG. 6 is a three-dimensional diagram of the elastic thermal pad of FIG. 4;
FIG. 7 is a schematic structural diagram of a temperature control assembly according to another embodiment not forming part of the present invention;
FIG. 8 is an exploded diagram of FIG. 7;
FIG. 9 is an enlarged view of the circle portion in FIG. 7, where a first compression portion is in an uncompressed state;
FIG. 10 is an enlarged view of the circle portion in FIG. 7, where a first compression portion is in a compressed state;
FIG. 11 is a three-dimensional diagram of the elastic thermal pad of FIG. 8;
FIG. 12 is a schematic structural diagram of a temperature control assembly according to yet another embodiment not forming part of the present invention; and FIG. 13 is an assembly diagram of an air duct assembly and a lower case.

Reference numerals in the accompanying drawings are described as follows:
1. battery;
1A. first battery;
1B. second battery;
2. temperature control assembly;
21. first side plate;
211. first body;
212. first extension portion;
22. second side plate;
221. second body;
222. second extension portion;
23. elastic thermal pad;
231. main body;
231A. first plate section;
231B. second plate section;
231C. connection section;
232. compression portion;
232A. third plate section;
232B. first extrusion section;
232C. second extrusion section;
233. connecting portion;
24. partition plate;
3. lower case;
4. air duct assembly;
41. air volume control plate;
42. first support plate;
43. second support plate;
44. mounting plate;
45. sealing strip;
5. fan;
6. strap;
7. upper cover;
8. end plate;
F. passage;
X. horizontal direction;
Y. longitudinal direction; and
Z. vertical direction.

### DESCRIPTION OF EMBODIMENTS

To make the objectives, technical solutions, and advantages of this application clearer, this application is further described below in detail with reference to the accompanying drawings and the embodiments. It should be understood that the embodiments described in this specification are merely intended to explain this application, but not to limit this application.

In the descriptions of this application, unless otherwise specified and defined explicitly, the terms "first" and "second" are merely intended for a purpose of description, and should not be understood as an indication or implication of relative importance, and the term "a plurality of" means two or more than two (including two). Unless otherwise specified, the term "connection" should be understood in a general sense. For example, the "connection" may be a fixed connection, a detachable connection, an integrated connection, an electrical connection or a signal connection; or may be a direct connection, or an indirect connection through an intermediate medium. A person of ordinary skill in the art can understand specific meanings of the foregoing terms in this application according to a specific situation.

In the descriptions of this specification, it should be understood that the directional terms such as "up" and "down" described in the embodiments of this application are described as seen from the angles shown in the accompanying drawings, and should not be understood as a limitation to the embodiments of this application. The following further describes this application in detail with reference to the embodiments and accompanying drawings.

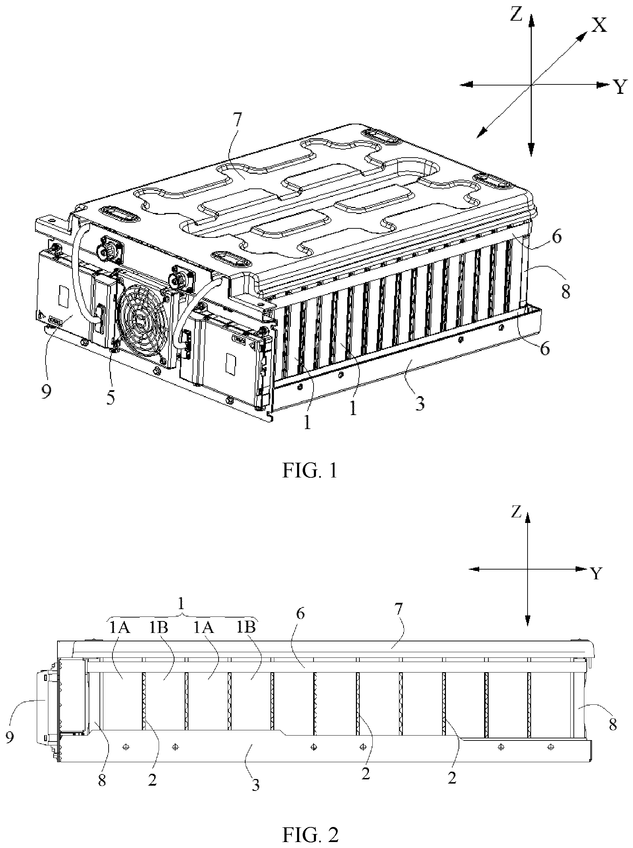

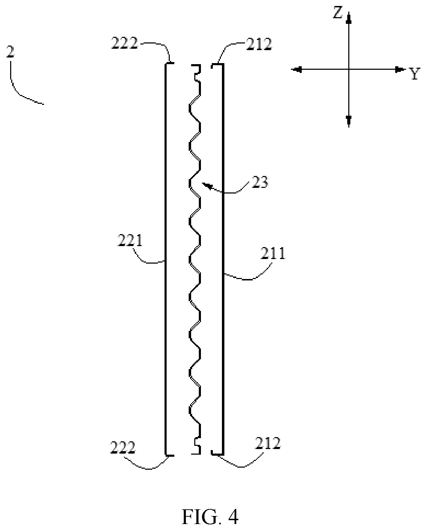

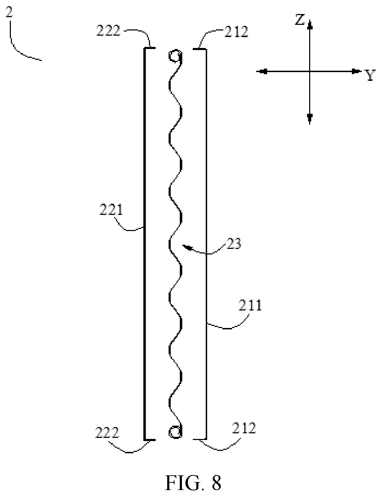

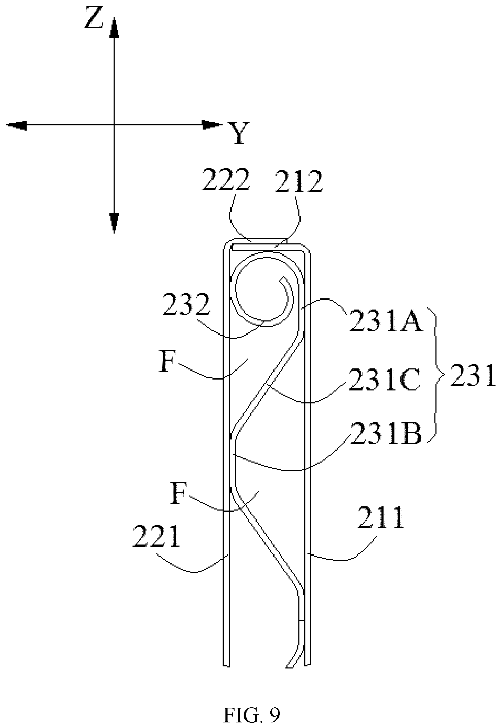

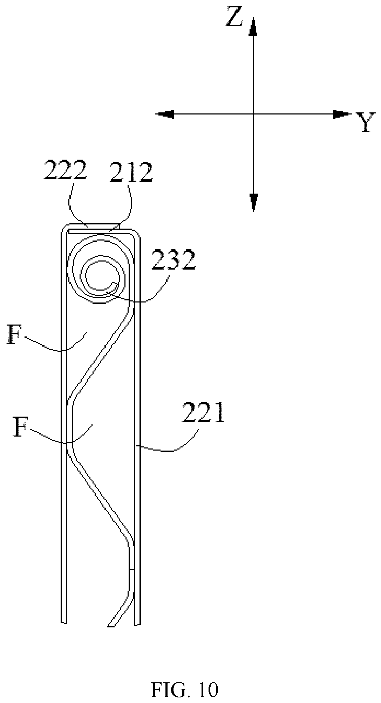

Referring to FIG. 1 to FIG. 13, a battery pack of this application includes a plurality of batteries 1, a temperature control assembly 2, a lower case 3, an air duct assembly 4, a fan 5, a strap 6, an upper cover 7, an end plate 8, a mounting plate 9, and a harness separator (not shown).

Referring to FIG. 1 and FIG. 2, the plurality of batteries 1 includes a first battery 1A and a second battery 1B, and the temperature control assembly 2 is disposed between the first battery 1A and the second battery 1B. Further, there may be a plurality of first batteries 1A and a plurality of second batteries 1B, the plurality of first batteries 1A and the plurality of second batteries 1B are arranged alternately in a longitudinal direction Y, and a temperature control assembly 2 may be disposed between each adjacent first battery 1A and second battery 1B.

To ensure strength and thermal conductivity of the temperature control assembly 2, the temperature control assembly 2 can be made of metal material, such as aluminum profile.

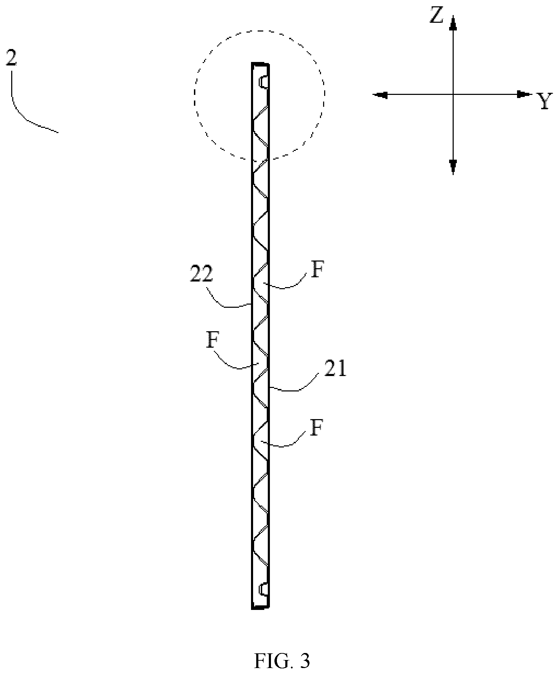

Referring to FIG. 3 to FIG. 12, the temperature control assembly 2 may include a first side plate 21, a second side plate 22, an elastic thermal pad 23, and a partition plate 24.

The first side plate 21 is disposed facing to the second side plate 22 along the longitudinal direction Y, and the second side plate 22 is connected to the first side plate 21 and forms a frame structure with a cavity together with the first side plate 21.

The first side plate 21 has a first body 211, extending in a vertical direction (Z); and a first extension portion 212, being connected to one end of the first body 211 and extending in the longitudinal direction (Y), where the first extension portion 212 is connected to the second side plate 22. A quantity of the first extension portions 212 is optionally one (that is, the first side plate 21 is an L-shaped structure) or two (that is, the first side plate 21 is a ]-shaped structure).

The second side plate 22 may be a flat structure as a whole (not shown). Alternatively, the second side plate 22 may have a second body 221, extending in the vertical direction Z; and a second extension portion 222, being connected to one end of the second body 221 and extend in the longitudinal direction Y, where the second extension portion 222 is connected to the first side plate 21. The second extension portion 222 is alternatively set to one or two in quantity.

When a quantity of the first extension portions 212 and the second extension portions 222 are both two, each of the first extension portion 212 and the corresponding second extension portion 222 are superposed and fixedly connected in the vertical direction Z.

The first body 211 of the first side plate 21 and the second body 221 of the second side plate 22 are disposed directly facing a large surface of a corresponding battery 1. When external air flows through passages F of the temperature control assembly 2, heat dissipation treatment of batteries 1 can be implemented.

The elastic thermal pad 23 is disposed in a cavity formed by the first side plate 21 and the second side plate 22 to divide the cavity into a plurality of passages F. Specifically, the elastic thermal pad 23 may be movably disposed in the cavity formed by the second side plate 22 and the first side plate 21. Alternatively, two ends of the elastic thermal pad 23 in the vertical direction Z are respectively abutted against corresponding first extension portions 212 of the first side plate 21.

The elastic thermal pad 23 has a main body 231, and the main body 231 includes: a first plate section 231A, being close to the first side plate 21 in the longitudinal direction Y and extend in the vertical direction Z; a second plate section 231B, being close to the second side plate 22 in the longitudinal direction Y and extend in the vertical direction Z; and a connection section 231C, extending obliquely from the first side plate 21 toward the second side plate 22 and be connected to the first plate section 231A and the second plate section 231B. In this case, the first plate section 231A, the connection section 231C and the second side plate 22 form a corresponding passage F, and the second plate section 231B, the connection section 231C and the first side plate 21 also form a corresponding passage F.

It should be noted that "a first plate section 231A, being close to the first side plate 21 in the longitudinal direction Y" herein includes two setting manners: (1) The first plate section 231A is disposed in contact with the first side plate 21. (2) The first plate section 231A is separated from the first side plate 21 by a certain distance, and an interval between the first plate section 231A and the first side plate 21 is smaller than an interval between the first plate section 231A and the second side plate 22.

Similarly, "a second plate section 231B, being to the second side plate 22 in the longitudinal direction Y" also includes two setting manners: (1) The second plate section 231B is disposed in contact with the second side plate 22. (2) The second plate section 231B is separated from the second side plate 22 by a certain distance, and an interval between the second plate section 231B and the second side plate 22 is smaller than an interval between the second plate section 231B and the first side plate 21.

During use of the battery pack, the batteries 1 will generate expansion forces. In this case, expansion forces of two adjacent batteries 1 (namely, a first battery 1A and a second battery 1B) are respectively applied to the first side plate 21 and the second side plate 22, and the first side plate 21 and second side plate 22 respectively compress the first plate section 231A and the second plate section 231B of the main body 231 in the longitudinal direction Y. Due to elastic and structural characteristics of the elastic thermal pad 23, the main body 231 of the elastic thermal pad 23 is deformed under the action of extrusion of the first side plate 21 and the second side plate 22 to absorb the expansion forces of the batteries 1 in time, thereby reducing the degree of deformation of the batteries 1 under the expansion forces, and thus service life of the batteries 1 is greatly improved.

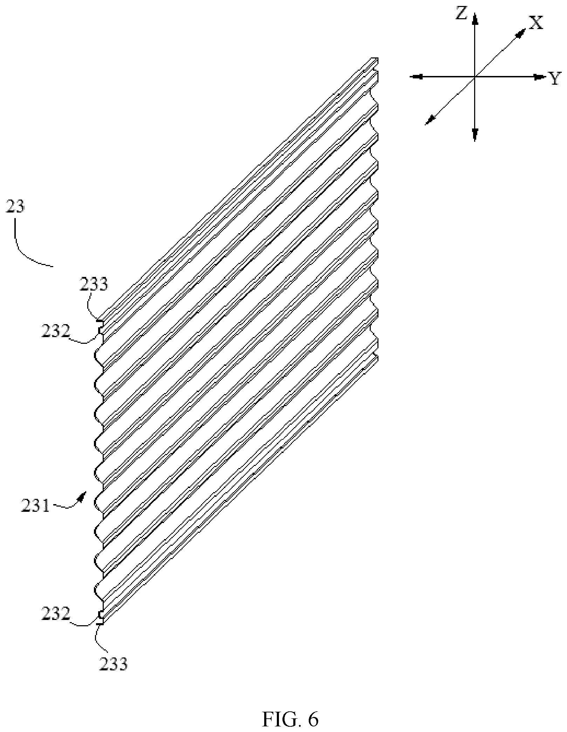

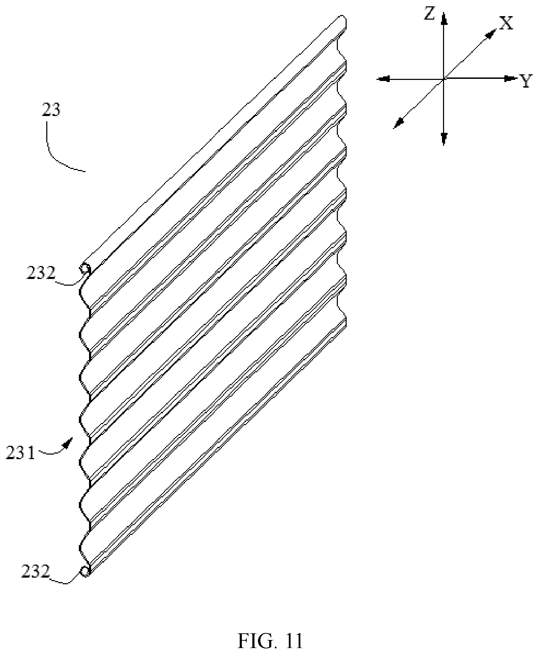

Referring to FIG. 6 and FIG. 11, the body 231 of the elastic thermal pad 23 may include a plurality of first plate sections 231A, a plurality of second plate sections 231B and a plurality of connection sections 231C, and adjacent first plate section 231A and second plate section 231B are connected by a corresponding connection section 231C. Thus, the plurality of first plate sections 231A, the plurality of second plate sections 231B and the plurality of connection sections 231C together form a wave-like structure (also referred to as a corrugated plate structure). This wave-like structure makes a contact area between the air and the elastic thermal pad 23 large, thus improving heat dissipation efficiency of the temperature control assembly 2 to the batteries 1.

The elastic thermal pad 23 further has a compression portion 232, being connected to one end, in the vertical direction Z, of the main body 231. There may be two compression portions 232, and the two compression portions 232 are respectively connected to two ends, in the vertical direction Z, of the main body 231. The compression portion 232 is disposed so that when the first plate section 231A and the second plate section 231B of the main body 231 are compressed by the first side plate 21 and the second side plate 22 in the longitudinal direction Y, the compression portion 232 is compressed by the main body 231 and deformed.

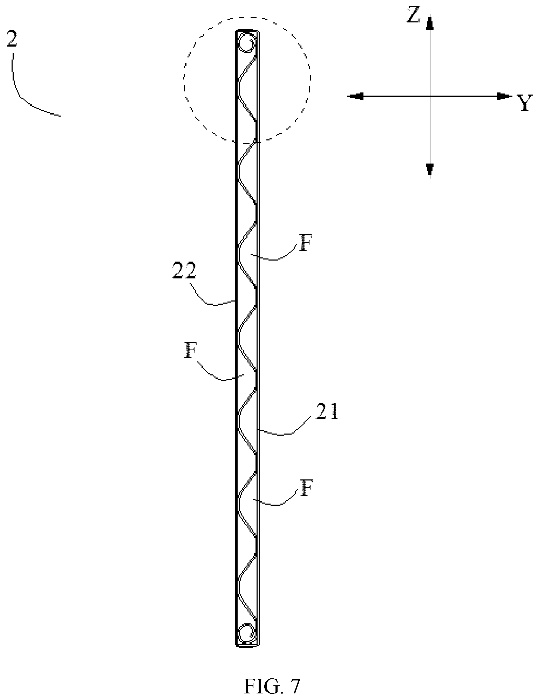

In a first embodiment, referring to FIG. 7 to FIG. 11, which does not form part of the invention, the compression portion 232 of the elastic thermal pad 23 may be formed as a winding structure (a cavity is formed). When the first plate section 231A and the second plate section 231B of the main body 231 are compressed by the first side plate 21 and the second side plate 22 in the longitudinal direction Y, the main body 231 extends in the vertical direction Z and the compression portion 232 abuts against the first extension portion 212 of the first side plate 21. In this case, an elongated portion of the main body 231 wraps around the compression portion 232 and compresses the compression portion 232. The compression portion 232 is deformed to provide sufficient space for the elongated portion of the main body 231, and thus a purpose of absorbing the expansion forces of the batteries 1 is achieved.

In the first embodiment, both ends of the elastic thermal pad 23 need to have sufficient mobility, and thus there is no need for a fixed connection between the compression portion 232 and the first extension portion 212 of the first side plate 21. A portion of the first plate section 231A of the main body 231 can be bonded to the first side plate 21 and a portion of the second plate section 231B of the main body 231 can be bonded to the second side plate 22. Preferably, the first plate section 231A located in the middle in the vertical direction Z is bonded to the first side plate 21, and the second plate section 231B located in the middle in the vertical direction Z is bonded to the second side plate 22.

In a second embodiment, referring to FIG. 3 to FIG. 6, which is according to the invention, the compression portion 232 of the elastic thermal pad 23 may be formed as an arch structure (a cavity is formed). The elastic thermal pad 23 further has a connecting portion 233, being located between the compression portion 232 and the first extension portion 212 in the vertical direction Z and connected to the compression portion 232. When the first plate section 231A and the second plate section 231B of the main body 231 are compressed by the first side plate 21 and the second side plate 22 in the longitudinal direction Y, the main body 231 extends in the vertical direction Z and the connecting portion 233 abuts against the first extension portion 212 of the first side plate 21, and the first extension portion 212 compresses the compression portion 232 together with the main body 231 via the connecting portion 233. The compression portion 232 is deformed to provide sufficient space for the elongated portion of the main body 231, and thus a purpose of absorbing the expansion forces of the batteries 1 is achieved.

Specifically, the compression portion 232 includes: a third plate section 232A, extending in the vertical direction Z and be spaced from the first side plate 21 and the second side plate 22 in the longitudinal direction Y; a first extrusion section 232B, extending obliquely from the third plate section 232A toward the first side plate 21 and be connected to the third plate section 232A and the main body 231; and a second extrusion section 232C, extending obliquely from the third plate section 232A toward the first side plate 21 and be connected to the third plate section 232A and the connecting portion 233.

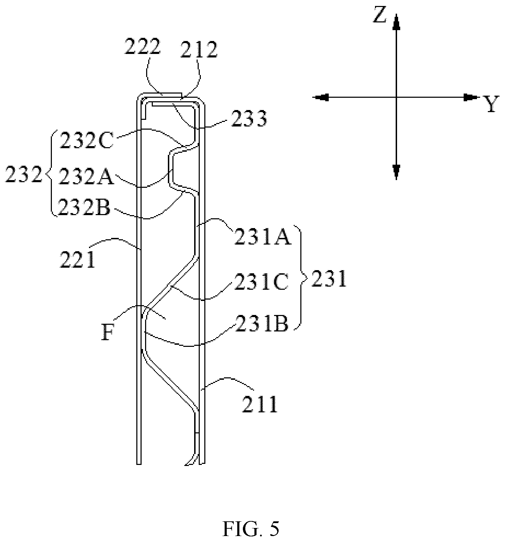

The connecting portion 233 may be formed as an L-shaped structure, as shown in FIG. 5.

In the second embodiment, the connecting portion 233 of the elastic thermal pad 23 may be directly fixed to the first extension portion 212, and other portions of the elastic thermal pad 23 and the first side plate 21 and the second side plate 22 do not need to be fixed.

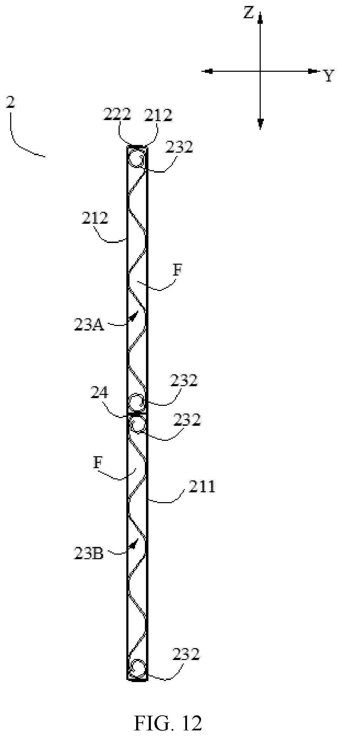

A quantity of elastic thermal pad 23 can be selectively set according to actual use. Specifically, referring to FIG. 3 to FIG. 5 and FIG. 7 to FIG. 10, there may be one elastic thermal pad 23. Referring to FIG. 12, there may be at least two elastic thermal pads 23, and the at least two elastic thermal pads 23 include a first elastic thermal pad 23A and a second elastic thermal pad 23B. The partition plate 24 extends in the longitudinal direction Y and be connected to the first side plate 21 and the second side plate 22. The first elastic thermal pad 23A is disposed above the partition plate 24, and the second elastic thermal pad 23B is disposed below the partition plate 24.

Referring to FIG. 1 and FIG. 2, the lower case 3 supports the plurality of batteries 1. The plurality of batteries 1 may be arranged in at least two rows of battery rows in a horizontal direction X, and the air duct assembly 4 is disposed between the two rows of battery rows and fixed to the lower case 3. The air duct assembly 4 and a corresponding battery row form an air duct, and the air duct is connected to a plurality of passages F and the fan 5 of a corresponding temperature control assembly 2.

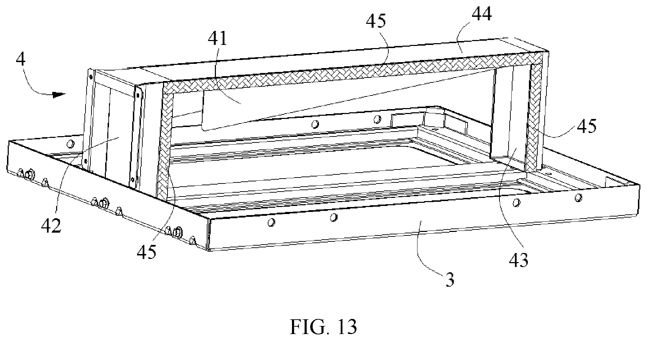

Referring to FIG. 13, the air duct assembly 4 may include an air volume control plate 41, a first support plate 42, a second support plate 43, a mounting plate 44, and a sealing strip 45.

The air volume control plate 41 is disposed in the air duct, the first support plate 42 and the second support plate 43 are disposed at an interval in the longitudinal direction Y, and the first support plate 42 is close to the fan 5. A height of the air volume control plate 41 decreases sequentially along a direction of the first support plate 42 toward the second support plate 43, so that the air duct expands from a side close to the fan 5 to a side away from the fan 5 in the longitudinal direction Y.

The mounting plate 44 extends along the longitudinal direction Y and is connected to the first support plate 42 and the second support plate 43, and the air volume control plate 41 is fixed to the mounting plate 44. The sealing strip 45 is disposed on the first support plate 42, the second support plate 43 and the mounting plate 44. When the air duct assembly 4 and a plurality of batteries 1 are assembled, the sealing strip 45 is bonded to a corresponding battery row to be hermetically connected with the battery row.

During use of a battery pack, under an action of the fan 5, external air can enter the plurality of passages F of the temperature control assembly 2 to implement heat dissipation of the batteries 1. In addition, based on setting of the air volume control plate 41, the amount of external air entering into different temperature control assemblies 2 is different, thus implementing uniform heat dissipation for all batteries 1.

Referring to FIG. 1, the end plate 8 is disposed at both ends of each battery row in the longitudinal direction Y. The strap 6 tightens circumferentially all corresponding batteries 1 in a battery row, corresponding temperature control assembly 2, and corresponding two end plates 8. The mounting plate 9 is located on the outside of a corresponding end plate 8 in the longitudinal direction Y, is fixedly connected to the lower case 3 and the corresponding end plate 8, and is fixedly mounted with the fan 5.

The harness separator is disposed above the plurality of batteries 1 and is directly fixed to the end plate 8, thereby helping to improve grouping efficiency and integration degree of the battery pack. Referring to FIG. 1 and FIG. 2, the upper cover 7 is disposed above the harness separator and fixedly connected to the harness separator by using a fastener (for example, a rivet). Herein because there is no clasp on the peripheral side of the upper cover 7, it can be directly processed by using suction molding technology, thus reducing processing costs.

An embodiment of this application further provides an apparatus, including the battery pack in the foregoing embodiment. The battery pack provides electrical energy. The apparatus includes but is not limited to a vehicle, a ship, an energy storage cabinet or an aircraft, where the vehicle may be a new energy vehicle, such as a battery electric vehicle, a hybrid electric vehicle, or an extended-range electric vehicle.

## Claims

1. A temperature control assembly (2) for a battery pack, comprising:
a first side plate (21);
a second side plate (22), disposed facing to the first side plate (21) along a longitudinal direction (Y), wherein the second side plate (22) is connected to the first side plate (21) and forms a cavity together with the first side plate (21); and
an elastic thermal pad (23), disposed in the cavity to divide the cavity into a plurality of passages (F), wherein
the elastic thermal pad (23) has a main body (231), and the main body (231) comprises: a first plate section (231A), which is close to the first side plate (21) in the longitudinal direction (Y) and extends in a vertical direction (Z); a second plate section (231B), which is close to the second side plate (22) in the longitudinal direction (Y) and extends in the vertical direction (Z); and a connection section (231C), which extends obliquely from the first side plate (21) toward the second side plate (22) and is connected to the first plate section (231A) and the second plate section (231B);
wherein the first side plate (21) has a first body (211), extending in the vertical direction (Z); and a first extension portion (212), being connected to one end of the first body (211) and extending in the longitudinal direction (Y), wherein the first extension portion (212) is connected to the second side plate (22); and,
wherein
the elastic thermal pad (23) further has a compression portion (232), being connected to one end, in the vertical direction (Z), of the main body (231); and
the compression portion (232) is disposed so that when the first plate section (231A) and the second plate section (231B) of the main body (231) are compressed by the first side plate (21) and the second side plate (22) in the longitudinal direction (Y), the compression portion (232) is compressed by the main body (231) and deformed; and,
wherein
the compression portion (232) is formed as an arch structure;
the elastic thermal pad (23) further has a connecting portion (233), being located between the compression portion (232) and the first extension portion (212) in the vertical direction (Z) and connected to the compression portion (232); and
when the first plate section (231A) and the second plate section (231B) of the main body (231) are compressed by the first side plate (21) and the second side plate (22) in the longitudinal direction (Y), the connecting portion (233) abuts against the first extension portion (212) of the first side plate (21), and the first extension portion (212) compresses the compression portion (232) together with the main body (231) via the connecting portion (233); **characterised in that**
the compression portion (232) comprises: a third plate section (232A), extending in the vertical direction (Z) and spaced from the first side plate (21) and the second side plate (22) in the longitudinal direction (Y); a first extrusion section (232B), extending obliquely from the third plate section (232A) toward the first side plate (21) and connected to the third plate section (232A) and the main body (231); and a second extrusion section (232C), extending obliquely from the third plate section (232A) toward the first side plate (21) and connected to the third plate section (232A) and the connecting portion (233).

2. The temperature control assembly (2) according to claim 1, wherein the first plate section (231A) is in contact with the first side plate (21), and the second plate section (231B) is in contact with the second side plate (22).

3. The temperature control assembly (2) according to claim 1, wherein
the elastic thermal pad (23) is movably disposed in the cavity formed by the second side plate (22) and the first side plate (21); or
two ends of the elastic thermal pad (23) in the vertical direction (Z) are respectively abutted against corresponding first extension portions (212) of the first side plate (21).

4. The temperature control assembly (2) according to claim 1, wherein
there is one elastic thermal pad (23); or
there are at least two elastic thermal pads (23), and the at least two elastic thermal pads (23) comprise a first elastic thermal pad (23A) and a second elastic thermal pad (23B);
the temperature control assembly (2) further comprises a partition plate (24), extending in the longitudinal direction (Y) and connected to the first side plate (21) and the second side plate (22); and
the first elastic thermal pad (23A) is disposed above the partition plate (24), and the second elastic thermal pad (23B) is disposed below the partition plate (24).

5. A battery pack comprising a plurality of batteries (1) and the temperature control assembly (2) according to any one claims 1 to 4, wherein the plurality of batteries (1) comprises a first battery (1A) and a second battery (1B), and the temperature control assembly (2) is disposed between the first battery (1A) and the second battery (1B).

6. An apparatus comprising the battery pack according to claim 5, wherein the battery pack provides electrical energy.

## Patentansprüche

1. Temperaturregelungsanordnung (2) für einen Batteriepack, die Folgendes umfasst:
eine erste Seitenplatte (21);
eine zweite Seitenplatte (22), die entlang einer Längsrichtung (Y) der ersten Seitenplatte (21) zugewandt angeordnet ist, wobei die zweite Seitenplatte (22) mit der ersten Seitenplatte (21) verbunden ist und zusammen mit der ersten Seitenplatte (21) einen Hohlraum bildet; und
ein elastisches thermisches Pad (23), das in dem Hohlraum angeordnet ist, um den Hohlraum in mehrere Durchgänge (F) zu unterteilen, wobei
das elastische thermische Pad (23) einen Hauptkörper (231) aufweist und der Hauptkörper (231) Folgendes umfasst: einen ersten Plattenabschnitt (231A), der sich in der Längsrichtung (Y) nahe der ersten Seitenplatte (21) befindet und sich in einer vertikalen Richtung (Z) erstreckt; einen zweiten Plattenabschnitt (231B), der sich in der Längsrichtung (Y) nahe der zweiten Seitenplatte (22) befindet und sich in der vertikalen Richtung (Z) erstreckt; und einen Verbindungsabschnitt (231C), der sich schräg von der ersten Seitenplatte (21) zu der zweiten Seitenplatte (22) erstreckt und mit dem ersten Plattenabschnitt (231A) und dem zweiten Plattenabschnitt (231B) verbunden ist;
wobei die erste Seitenplatte (21) einen ersten Körper (211) aufweist, der sich in der vertikalen Richtung (Z) erstreckt; und
einen ersten Verlängerungsabschnitt (212), der mit einem Ende des ersten Körpers (211) verbunden ist und sich in der Längsrichtung (Y) erstreckt, wobei der erste Verlängerungsabschnitt (212) mit der zweiten Seitenplatte (22) verbunden ist; und
wobei
das elastische thermische Pad (23) ferner einen Kompressionsabschnitt (232) aufweist, der, in der vertikalen Richtung (Z), mit einem Ende des Hauptkörpers (231) verbunden ist; und
der Kompressionsabschnitt (232) so angeordnet ist, dass, wenn der erste Plattenabschnitt (231A) und der zweite Plattenabschnitt (231B) des Hauptkörpers (231) durch die erste Seitenplatte (21) und die zweite Seitenplatte (22) in der Längsrichtung (Y) zusammengedrückt werden, der Kompressionsabschnitt (232) durch den Hauptkörper (231) zusammengedrückt und verformt wird; und,
wobei
der Kompressionsabschnitt (232) als eine Bogenstruktur gebildet ist;
das elastische thermische Pad (23) ferner einen Verbindungsabschnitt (233) aufweist, der sich zwischen dem Kompressionsabschnitt (232) und dem ersten Verlängerungsabschnitt (212) in der vertikalen Richtung (Z) befindet und mit dem Kompressionsabschnitt (232) verbunden ist; und
wenn der erste Plattenabschnitt (231A) und der zweite Plattenabschnitt (231B) des Hauptkörpers (231) durch die erste Seitenplatte (21) und die zweite Seitenplatte (22) in der Längsrichtung (Y) zusammengedrückt werden, der Verbindungsabschnitt (233) an dem ersten Verlängerungsabschnitt (212) der ersten Seitenplatte (21) anliegt, und der erste Verlängerungsabschnitt (212) den Kompressionsabschnitt (232) zusammen mit dem Hauptkörper (231) über den Verbindungsabschnitt (233) zusammendrückt; **dadurch gekennzeichnet, dass**
der Kompressionsabschnitt (232) Folgendes umfasst: einen dritten Plattenabschnitt (232A), der sich in der vertikalen Richtung (Z) erstreckt und von der ersten Seitenplatte (21) und der zweiten Seitenplatte (22) in der Längsrichtung (Y) beabstandet ist; einen ersten Extrusionsabschnitt (232B), der sich schräg von dem dritten Plattenabschnitt (232A) zu der ersten Seitenplatte (21) erstreckt und mit dem dritten Plattenabschnitt (232A) und dem Hauptkörper (231) verbunden ist; und einen zweiten Extrusionsabschnitt (232C), der sich schräg von dem dritten Plattenabschnitt (232A) zu der ersten Seitenplatte (21) erstreckt und mit dem dritten Plattenabschnitt (232A) und dem Verbindungsabschnitt (233) verbunden ist.

2. Temperaturregelungsanordnung (2) nach Anspruch 1, wobei der erste Plattenabschnitt (231A) in Kontakt mit der ersten Seitenplatte (21) ist und der zweite Plattenabschnitt (231B) in Kontakt mit der zweiten Seitenplatte (22) ist.

3. Temperaturregelungsanordnung (2) nach Anspruch 1, wobei
das elastische thermische Pad (23) beweglich in dem Hohlraum angeordnet ist, der durch die zweite Seitenplatte (22) und die erste Seitenplatte (21) gebildet wird; oder
zwei Enden des elastischen thermischen Pads (23) in vertikaler Richtung (Z) jeweils an entsprechenden ersten Verlängerungsabschnitten (212) der ersten Seitenplatte (21) anliegen.

4. Temperaturregelungsanordnung (2) nach Anspruch 1, wobei
es ein elastisches thermisches Pad (23) gibt; oder
es mindestens zwei elastische thermische Pads (23) gibt und die mindestens zwei elastischen thermischen Pads (23) ein erstes elastisches thermisches Pad (23A) und ein zweites elastisches thermisches Pad (23B) umfassen;
die Temperaturregelungsanordnung (2) ferner eine Trennplatte (24) umfasst, die sich in der Längsrichtung (Y) erstreckt und mit der ersten Seitenplatte (21) und der zweiten Seitenplatte (22) verbunden ist; und
das erste elastische thermische Pad (23A) oberhalb der Trennplatte (24) angeordnet ist und das zweite elastische thermische Pad (23B) unterhalb der Trennplatte (24) angeordnet ist.

5. Batteriepack, der mehrere Batterien (1) und die Temperaturregelungsanordnung (2) nach einem der Ansprüche 1 bis 4 umfasst, wobei die mehreren Batterien (1) eine erste Batterie (1A) und eine zweite Batterie (1B) umfassen und die Temperaturregelungsanordnung (2) zwischen der ersten Batterie (1A) und der zweiten Batterie (1B) angeordnet ist.

6. Einrichtung, die den Batteriepack nach Anspruch 5 umfasst, wobei der Batteriepack elektrische Energie bereitstellt.

## Revendications

1. Ensemble de contrôle de température (2) pour un bloc-batterie comprenant :
une première plaque latérale (21) ;
une seconde plaque latérale (22), disposée face à la première plaque latérale (21) le long d'une direction longitudinale (Y), dans lequel la seconde plaque latérale (22) est reliée à la première plaque latérale (21) et forme une cavité avec la première plaque latérale (21) ; et
un tampon thermique élastique (23), disposé dans la cavité pour diviser la cavité en une pluralité de passages (F), dans lequel
le tampon thermique élastique (23) a un corps principal (231), et le corps principal (231) comprend : une première section de plaque (231A), qui est proche de la première plaque latérale (21) dans la direction longitudinale (Y) et s'étend dans une direction verticale (Z) ; une seconde section de plaque (231B), qui est proche de la seconde plaque latérale (22) dans la direction longitudinale (Y) et s'étend dans la direction verticale (Z) ; et une section de liaison (231C), qui s'étend obliquement de la première plaque latérale (21) vers la seconde plaque latérale (22) et est reliée à la première section de plaque (231A) et à la seconde section de plaque (231B) ;
dans lequel la première plaque latérale (21) a un premier corps (211), s'étendant dans la direction verticale (Z) ; et
une première partie d'extension (212), reliée à une extrémité du premier corps (211) et s'étendant dans la direction longitudinale (Y), dans lequel la première partie d'extension (212) est reliée à la seconde plaque latérale (22) ; et,
dans lequel
le tampon thermique élastique (23) a en outre une partie de compression (232), reliée à une extrémité, dans la direction verticale (Z), du corps principal (231) ; et
la partie de compression (232) est disposée de sorte que lorsque la première section de plaque (231A) et la seconde section de plaque (231B) du corps principal (231) sont comprimées par la première plaque latérale (21) et la seconde plaque latérale (22) dans la direction longitudinale (Y), la partie de compression (232) est comprimée par le corps principal (231) et déformée ; et,
dans lequel
la partie de compression (232) est formée comme une structure en arche ;
le tampon thermique élastique (23) a en outre une partie de liaison (233), située entre la partie de compression (232) et la première partie d'extension (212) dans la direction verticale (Z) et reliée à la partie de compression (232) ; et
lorsque la première section de plaque (231A) et la seconde section de plaque (231B) du corps principal (231) sont comprimées par la première plaque latérale (21) et la seconde plaque latérale (22) dans la direction longitudinale (Y), la partie de liaison (233) vient en butée contre la première partie d'extension (212) de la première plaque latérale (21), et la première partie d'extension (212) comprime la partie de compression (232) conjointement avec le corps principal (231) par l'intermédiaire de la partie de liaison (233) ; **caractérisé en ce que**
la partie de compression (232) comprend : une troisième section de plaque (232A), s'étendant dans la direction verticale (Z) et espacée de la première plaque latérale (21) et de la seconde plaque latérale (22) dans la direction longitudinale (Y) ; une première section d'extrusion (232B), s'étendant obliquement de la troisième section de plaque (232A) vers la première plaque latérale (21) et reliée à la troisième section de plaque (232A) et au corps principal (231) ; et une seconde section d'extrusion (232C), s'étendant obliquement de la troisième section de plaque (232A) vers la première plaque latérale (21) et reliée à la troisième section de plaque (232A) et à la partie de liaison (233).

2. Ensemble de contrôle de température (2) selon la revendication 1, dans lequel la première section de plaque (231A) est en contact avec la première plaque latérale (21), et la seconde section de plaque (231B) est en contact avec la seconde plaque latérale (22).

3. Ensemble de contrôle de température (2) selon la revendication 1, dans lequel
le tampon thermique élastique (23) est disposé de manière mobile dans la cavité formée par la seconde plaque latérale (22) et la première plaque latérale (21) ; ou
deux extrémités du tampon thermique élastique (23) dans la direction verticale (Z) sont respectivement en butée contre des premières parties d'extension (212) correspondantes de la première plaque latérale (21).

4. Ensemble de contrôle de température (2) selon la revendication 1, dans lequel
il y a un tampon thermique élastique (23) ; ou
il y a au moins deux tampons thermiques élastiques (23), et les au moins deux tampons thermiques élastiques (23) comprennent un premier tampon thermique élastique (23A) et un second tampon thermique élastique (23B) ;
l'ensemble de contrôle de température (2) comprend en outre une plaque de séparation (24), s'étendant dans la direction longitudinale (Y) et reliée à la première plaque latérale (21) et à la seconde plaque latérale (22) ; et
le premier tampon thermique élastique (23A) est disposé au-dessus de la plaque de séparation (24), et le second tampon thermique élastique (23B) est disposé au-dessous de la plaque de séparation (24).

5. Bloc-batterie comprenant une pluralité de batteries (1) et l'ensemble de contrôle de température (2) selon l'une quelconque des revendications 1 à 4, dans lequel la pluralité de batteries (1) comprend une première batterie (1A) et une seconde batterie (1B), et l'ensemble de contrôle de température (2) est disposé entre la première batterie (1A) et la seconde batterie (1B).

6. Appareil comprenant le bloc-batterie selon la revendication 5, dans lequel le bloc-batterie fournit de l'énergie électrique.
